# EUROPEAN PATENT SPECIFICATION

(11) **EP 4 337 067 B1**
(45) Date of publication and mention of the grant of the patent: **19.03.2025**
(21) Application number: 22727988.2
(22) Date of filing: 11.05.2022
(51) Int. Cl.: A47J 27/00, A47J 27/04

(54) **MACHINE AND METHOD FOR COOKING FOOD**
MASCHINE UND VERFAHREN ZUM KOCHEN VON LEBENSMITTELN
MACHINE ET PROCEDE DE CUISSON D'ALIMENTS

(30) Priority: 12.05.2021 IT 202100012227
(43) Date of publication of application: 20.03.2024
(73) Proprietor: Pastificio Rana S.p.A., 37057 San Giovanni Lupatoto (Verona) (IT)
(72) Inventor: RANA, Gian Luca, 37057 San Giovanni Lupatoto (VR) (IT)
(74) Representative: Studio Torta S.p.A.
(86) International application number: PCT/IB2022/054382
(87) International publication number: WO 2022/238923

(56) References cited:
- WO-A1-2019/207509
- WO-A1-2020/212909
- KR-A- 20170 109 203

## Description

### Technical Field of the Invention

The present invention relates to a machine and to a method for cooking food.

In particular, the present invention relates to a machine and to a method for cooking food by means of the supply of hot water and steam.

### State of the Art

Within the scope of the quick catering industry, it is known to use machines for cooking fresh food and/or for heating precooked food by means of the use of steam.

Patent applications No. WO 2019/207509, No. WO 2020/212909 and No. WO 2020/212207 of the applicant teach how to cook fresh food contained in a container by means of the supply of hot water and steam into the container containing the food.

Document KR 20170109203 discloses a further example of an apparatus for heating and cooking food.

The cooking of fresh food by means of water and steam requires dosing the steam and the hot water so as to cook the food quickly. At the same time, it is necessary to reach high qualitative levels with regard to the cooking of the food and prevent the presence of water on the bottom of the container so as to meet the customer's expectations both in terms of taste and in terms of product presentation.

Thanks to the present invention, it is possible to automatically and quickly prepare a plurality of different recipes associated with respective cooking programs, container so as to meet the customer's expectations both in terms of taste and in terms of product presentation.

The object of the present invention is to provide a machine for cooking food which manages to conciliate the above-described requirements in a simple and cost-effective manner.

### Subject and Summary of the Invention

According to the present invention, a machine for cooking food according to claim 1 is provided. dispensing in an independent manner steam and hot water inside the container.

The control of the time of the steam supply and of the volume of water to be dispensed into the container allows implementing each cooking program in a simple and effective manner.

In particular, the first solenoid valve and the second solenoid valve are on-off type.

In this manner, it is possible to control the supply of steam and hot water to the first and the second openings in a simple and reliable manner.

In particular, the control unit is configured to close in sequence the second solenoid valve and, after a given time interval, the first solenoid valve, so as to interrupt the hot water supply in advance with respect to the end of the steam supply.

In a configuration not covered by the present invention as defined by the appended claims, the control unit is configured to control the first solenoid valve so as to supply steam to the first opening at intervals.

According to the present invention, the control unit is configured to control the second solenoid valve so as to supply hot water to the second opening at intervals.

In this manner, it is possible to control the cooking of the food in the container and prepare a wide range of different recipes.

In particular, the control unit comprises a user interface configured to select a cooking program from a plurality of cooking programs related to respective recipes; the control unit being configured to control the first and the second solenoid valves depending on the selected cooking program so as to prepare the desired recipe.

In particular, the control unit is configured to emit an authorization signal for opening the container and for removing the container from the machine.

In this manner, it is possible to communicate to a user of the machine that the cooking program has come to an end.

In particular, the user interface is configured to set cooking programs depending on respective recipes.

In this manner, it is possible to store a plurality of different recipes in the control unit.

In particular, the user interface is configured to select the time of the steam supply, and/or the steam supply intervals, and/or the volume of hot water to be dispensed, and/or the hot water supply intervals, and/or the delay of the water supply with respect to the steam supply, and/or the delay of the opening of the container with respect to the closing of the first solenoid valve.

In this manner, it is possible to determine the operational parameters of a cooking program.

A further object of the present invention is to provide a method for cooking food according to claim 8, which allows mitigating the drawbacks of the prior art.

Thanks to the present method, it is possible to supply steam and hot water into the container simultaneously and/or according to any sequence so as to prepare a wide range of different recipes, each of which is associated with a given cooking program.

### Brief Description of the Drawings

The invention is described in the following with reference to the accompanying drawings, which illustrate a non-limiting example embodiment thereof, wherein:
- Figure 1 is a schematic view, with parts removed for clarity, of a machine for cooking food;
- Figure 2 is a detailed view of a detail of the machine of Figure 1; and
- Figures 3 is a graph that shows respective opening and closing states of the steam supply solenoid valve and of the hot water supply solenoid valve of the machine for cooking food according to the present invention.
- Figure 4 is a graph that shows a configuration which is not part of the scope of the present invention, said graph is showing respective opening and closing states of the steam supply solenoid valve and of the hot water supply solenoid valve of a machine for cooking food.

### Detailed Description of Preferred Embodiments of the Invention

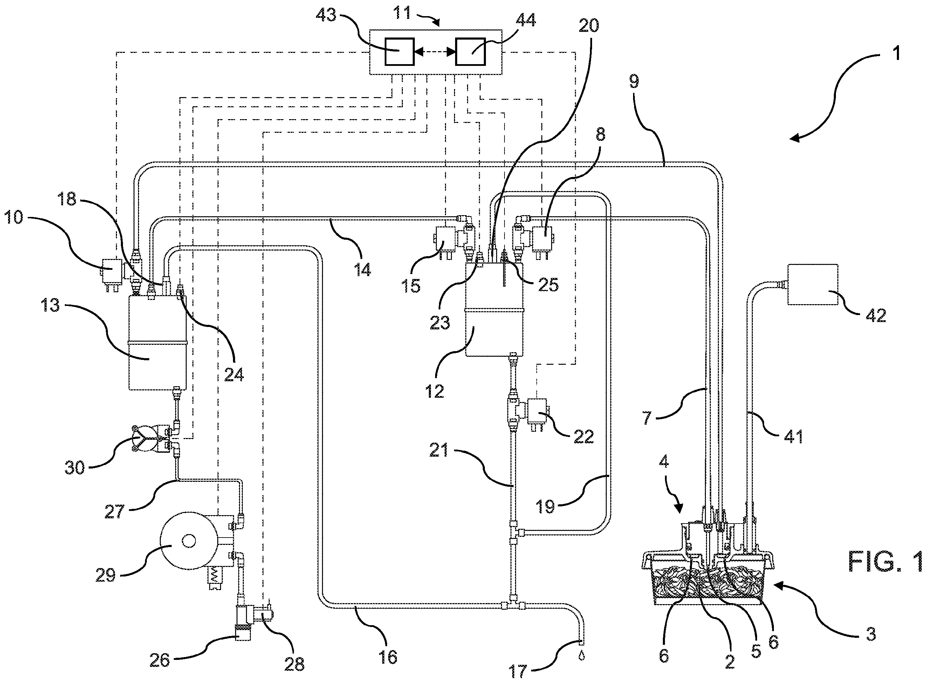

With reference to Figure 1, reference numeral 1 indicates, as a whole, a machine for cooking food 2 in a container 3 containing said food 2.

The machine 1 can be used in public catering places (for example coffee bars, restaurants, diners etc.) or at home.

In accordance with a non-limiting embodiment of the present invention, the food 2 contained in the container 3 can be a dose of raw pasta or a sauce for said dose of pasta.

The machine 1 comprises a dispenser 4 configured to be arranged over the container 3 and to close the container 3 and comprising at least one opening 5 for dispensing steam into the container 3 and at least one opening 6 for dispensing hot water into the container 3; a duct 7 and a solenoid valve 8, for supplying steam to the opening 5; a duct 9 and a solenoid valve 10 for supplying hot water to the opening 6; and a control unit 11 configured to control the opening and the closing of the solenoid valves 8 and 10 so as to modulate the time of the steam supply and the volume of water depending on a selected cooking program.

In accordance with a non-limiting embodiment of the present invention, the solenoid valves 8 and 10 are on-off type.

In the non-limiting case of the present invention described and illustrated herein, the machine 1 comprises a boiler 12, which is configured to provide steam and is connected to the duct 7; a boiler 13, which is configured to provide hot water and is connected to the duct 9; and a duct 14 and a solenoid valve 15 of on-off type for supplying hot water from the boiler 13 to the boiler 12.

In accordance with an embodiment, each boiler 12, 13 comprises electric resistors, not shown in the accompanying figures, for adjusting the quantity of heat provided and, consequently, the steam temperature and the hot water temperature, respectively.

In particular, the boiler 12 is configured to heat the steam at a temperature ranging between approximately 105 °C and approximately 135 °C, and the boiler 13 is configured to heat the hot water at a temperature ranging between approximately 90 °C and approximately 105 °C.

In particular, the machine 1 comprises a duct 16 for supplying hot water from the boiler 13 to a discharge 17, and a safety valve 18, which is coupled to the boiler 13, is in fluidic communication with the duct 16 and is configured to allow the passage of hot water in the duct 16 in case the pressure inside the boiler 13 exceeds a given threshold.

In particular, the machine 1 comprises a duct 19 for supplying steam from the boiler 12 to the discharge 17, and a safety valve 20, which is coupled to the boiler 12, is in fluidic communication with the duct 19 and is configured to allow the passage of steam in the duct 19 in case the pressure inside the boiler 12 exceeds a given threshold.

Furthermore, the machine 1 comprises a duct 21 for supplying discharge water from the boiler 12 to the discharge 17, and a solenoid valve 22 of on-off type configured to control the supply of discharge water to the discharge 17 along the duct 21.

In particular, the machine 1 comprises a temperature sensor 23, which is configured to emit a first temperature signal related to the temperature of the steam in the boiler 12; and a temperature sensor 24, which is configured to emit a second temperature signal related to the temperature of the hot water in the boiler 13.

Furthermore, the machine 1 comprises a level probe 25, which is associated with the boiler 12 and is configured to emit a level signal related to the level of water in the boiler 12.

In the case described and illustrated herein, the machine 1 comprises a connection 26 to a water supply network, which ensures an almost unlimited supply of water at ambient temperature; a duct 27 for supplying water at ambient temperature from the connection 26 to the boiler 13; a solenoid valve 28 of on-off type for controlling the supply of water at ambient temperature along the duct 27; a pump 29, which is configured to provide a head sufficient for allowing the flow of the water inside the machine 1; and a flow-rate meter 30, preferably a flowmeter, which is configured to emit a flow-rate signal related to the flow-rate of the water running in the duct 27.

In accordance with a further embodiment, not shown in the accompanying figures, the machine 1 comprises, in alternative to the connection 26, a tank, which is configured to contain water at ambient temperature and is fluidically connected to the duct 27.

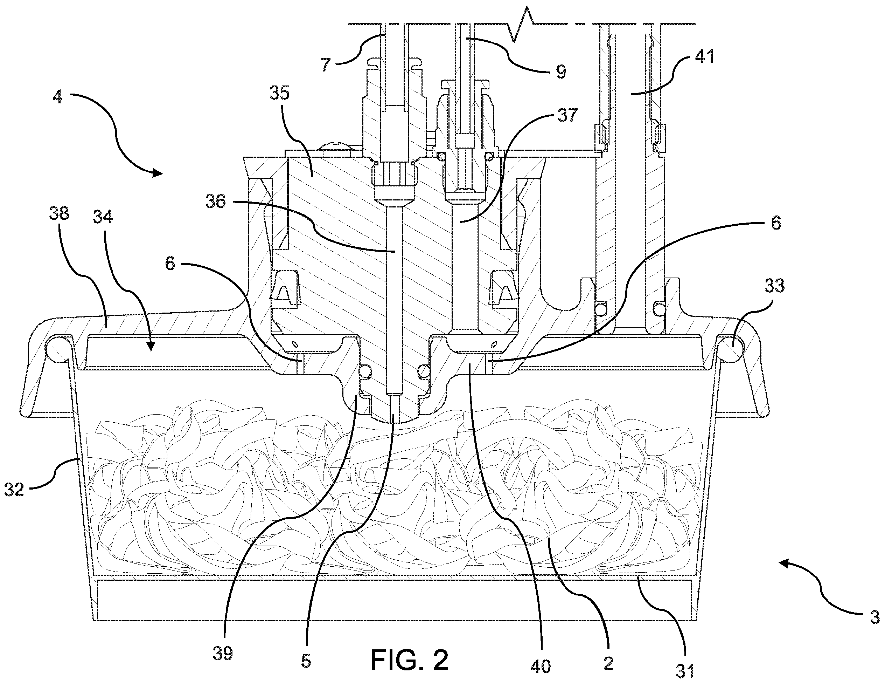

With reference to Figure 2, the container 3 comprises a base wall 31, preferably having a circular shape; a side wall 32, preferably slightly flared, provided with an upper edge 33; and an opening 34, preferably having a circular shape, opposite the base wall 31.

The dispenser 4 comprises a central body 35 provided with a steam supply channel 36, which is in fluidic communication with the duct 7 and with the openings 5, and with a hot water supply channel 37, which is in fluidic communication with the duct 9 and with the openings 6; and a lid 38, which is arranged around the central body 35 and is configured to close the opening 34 of the container 3 so as to form a substantially closed cooking compartment for the cooking of the food 2.

In particular, the central body 35 comprises a central protrusion 39, which is provided with the openings 5; and an annular wall 40, which extends around the central protrusion 39 and is provided with the openings 6.

With reference to Figure 1, the machine 1 comprises a duct 41, which is configured to evacuate steam from the container 3 and is connected to a steam discharge 42. In particular, the duct 41 extends through the lid 38 so as to put the inside of the cooking compartment in fluidic communication with the steam discharge 42.

The control unit 11 comprises a user interface 43 configured to allow the selection of a cooking program from a plurality of cooking programs related to respective recipes. The control unit 11 is configured to control the solenoid valves 8 and 10 depending on a selected cooking program.

Furthermore, the control unit 11 is configured to receive the signals emitted by the temperature sensors 23 and 24, by the level probe 25 and by the flow-rate meter 30 and to control the solenoid valves 8, 10 and 15 depending on the signals received from the temperature sensors 23 and 24, from the level probe 25 and from the flow-rate meter 30.

In accordance with an embodiment, the user interface 43 comprises a touch-screen panel, not shown in the accompanying figures, by means of which an operator can view and manually select a desired recipe.

Furthermore, the control unit 11 comprises a storage 44, in which a plurality of recipes is stored. Each recipe is associated with a plurality of cooking parameters which define a given cooking program.

The user interface 43 is configured to allow an operator to set said cooking programs and to store said cooking programs in the storage 44.

More specifically, the plurality of cooking parameters comprises the time of the steam supply, and/or the steam supply intervals, and/or the volume of hot water to be dispensed, and/or the hot water supply intervals, and/or the delay of the hot water supply with respect to the steam supply, and/or the delay of the opening of the container 3 with respect to the closing of the solenoid valve 8, and/or the flow-rate of hot water to be dispensed inside the container 3.

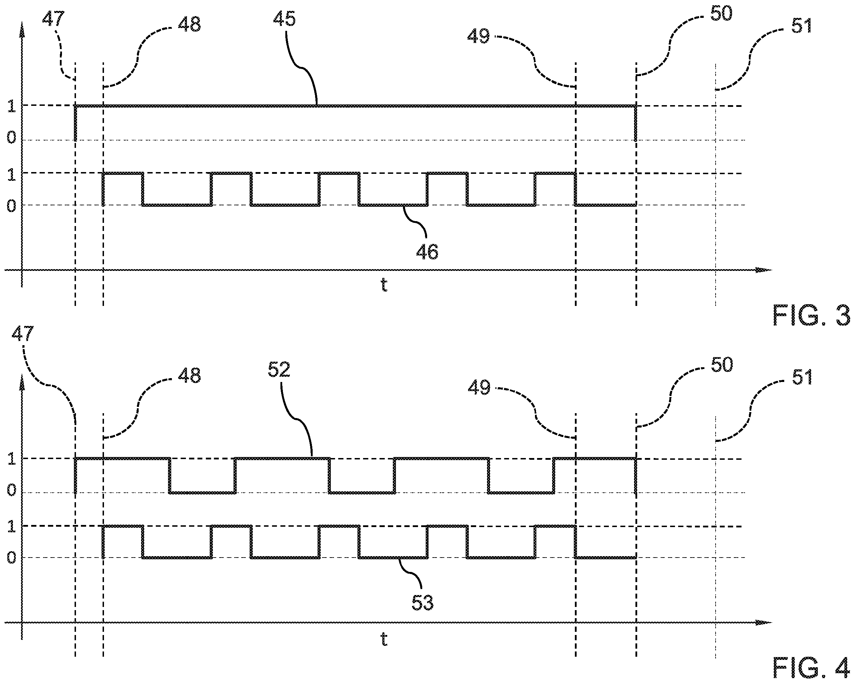

With reference to Figure 3, a graph is shown of an opening and closing state 45 of the solenoid valve 8 and of an opening and closing state 46 of the solenoid valve 10 in a particular operational configuration of the machine 1. More specifically, the graph of Figure 3 is a cartesian plane wherein the abscissa axis represents the time and the ordinate axis represents the opening/closing states 45 and 46 of the solenoid valves 8 and 10, each of which can assume the value 0 (closed solenoid valves 8 and 10) or the value 1 (open solenoid valves 8 and 10). When the solenoid valves 8 and 10 are open, steam and hot water are dispensed inside the container 3. Vice versa, when the solenoid valves 8 and 10 are closed the supply of steam and hot water inside the container 3 is interrupted.

In the non-limiting case of the present invention described and illustrated herein, the control unit 11 is configured to control the state 45 of the solenoid valve 8 so as to supply in a continuous manner steam to the openings 5 and to control the state 46 of the solenoid valve 10 so as to supply hot water to the openings 6 at intervals.

The control unit 11 is configured to determine the delay of the hot water supply with respect to the steam supply. In such circumstance, the control unit 11 is configured to control the opening of the solenoid valve 8 at a time instant 47 and to control the opening of the solenoid valve 10 at a subsequent time instant 48 with respect to the time instant 47.

Furthermore, the control unit 11 is configured to close in sequence the solenoid valve 10 and, after a given time interval, the solenoid valve 8. In other words, the control unit 11 is configured to control the closing of the solenoid valve 10 at a time instant 49 and to control the closing of the solenoid valve 8 at a time instant 50, which is subsequent with respect to the time instant 49.

The control unit 11 is configured to emit an authorization signal for opening the container 3 and for removing the container 3 from the machine 1 once the cooking program has come to an end. In particular, the control unit 11 is configured to emit said authorization signal at a given time instant 51, subsequent to the closing time instant 50 of the solenoid valve 8 and to the opening time instant 49 of the solenoid valve 10.

In accordance with an embodiment, the user interface 43 is configured to display the authorization signal emitted by the control unit 11 and/or to emit a sound notice related to the authorization signal.

With reference to Figure 4, a graph is shown of an opening and closing state 52 of the solenoid valve 8 and of an opening and closing state 53 of the solenoid valve 10 in a further operational configuration of the machine 1. In the non-limiting case of the present invention described and illustrated herein, the control unit 11 is configured to control the state 52 of the solenoid valve 8 so as to supply steam to the openings 5 at intervals and to control the state 53 of the solenoid valve 10 so as to supply hot water to the openings 6 at intervals.

In use and with reference to Figure 1, an operator arranges the container 3 containing food 2 under the dispenser 4 so that the lid 38 closes the opening 34 of the container 3 and selects by means of the user interface 43 the desired recipe from the plurality of recipes stored in the storage 44.

The control unit 11 associates the selected recipe with a cooking program and respective cooking parameters and controls the solenoid valves 8, 10, 15, 22 and 28 and the pump 29 depending on said cooking parameters and on the signals emitted by the temperature sensors 23 and 24, by the level probe 25 and by the flow-rate meter 30.

With reference to Figure 3, the control unit 11 controls the opening of the solenoid valve 8 at the time instant 47 allowing the supply of steam inside the container 3. After a given time interval, the control unit 11 controls the opening of the solenoid valve 10 at the time instant 48 allowing the supply of hot water inside the container 3. The control unit 11 keeps the solenoid valve 8 open up to the time instant 50 allowing the continuous supply of steam to the openings 5 and intermittently opens/closes the solenoid valve 10 so as to supply hot water to the openings 6 at intervals.

When the selected cooking program is coming close to an end, the control unit 11 closes the solenoid valve 10 at the time instant 49 and, after a given time interval, the solenoid valve 8 at the time instant 50.

Once the cooking program has come to an end, the control unit 11 emits at the time instant 51 the authorization signal for opening the container 3 and for removing the container 3 from the machine 1. Said authorization signal is displayed by the user interface 43.

With reference to Figure 4, the control unit 11 intermittently opens/closes the solenoid valves 8 and 10 so as to supply at intervals steam and hot water respectively to the openings 5 and to the openings 6.

During each cooking process, the control unit 11 controls the solenoid valves 8 and 10 independently of each other. In this manner, it is possible to supply steam and hot water into the container 3 simultaneously and/or according to any sequence.

It is evident that variations can be made to the present invention without departing from the scope of protection of the appended claims.

## Claims

1. A machine for cooking food, the machine (1) comprising:
- a dispenser (4) configured to be arranged over a container (3) containing food (2) and to close the container (3) and comprising at least one first opening (5) to dispense steam into the container (3) and at least one second opening (6) to dispense hot water into the container (3);
- a first duct (7) and a first solenoid valve (8) to supply steam to the first opening (5);
- a second duct (9) and a second solenoid valve (10) to supply hot water to the second opening (6); and
- a control unit (11) configured to control the opening and the closing of the first and the second solenoid valves (8, 10) so as to modulate the time of the steam supply and the volume of water depending on a selected cooking program,
said machine for cooking food being characterised that the control unit (11) is configured to control a first opening/closing state (45) of the first solenoid valve (8) so as to supply in a continuous manner steam to the first opening (5) and to control a second opening/closing state (46) of the second solenoid valve (10) so as to supply hot water to the second opening (6) at intervals.

2. The machine as claimed in Claim 1, wherein the first solenoid valve (8) and the second solenoid valve (10) are on-off type.

3. The machine as claimed in Claim 1 or 2, wherein the control unit (11) is configured to close in sequence the second solenoid valve (10) and, after a given time interval, the first solenoid valve (8).

4. The machine as claimed in any one of the foregoing Claims, wherein the control unit (11) is configured to emit an authorization signal to open the container (3) and to remove the container (3) from the machine (1).

5. The machine as claimed in any one of the foregoing Claims, wherein the control unit (11) comprises a user interface (43) configured to select a cooking program from a plurality of cooking programs related to respective recipes; the control unit (11) being configured to control the first and the second solenoid valves (8, 10) depending on the selected cooking program.

6. The machine as claimed in Claim 5, wherein the user interface (43) is configured to set cooking programs depending on respective recipes.

7. The machine as claimed in Claim 5 or 6, wherein the user interface (43) is configured to select the time of the steam supply, and/or the volume of hot water to be supplied, and/or the hot water supply intervals, and/or the delay of the hot water supply with respect to the steam supply, and/or the delay of the container opening (3) with respect to the closing of the first solenoid valve (8).

8. A method for cooking food, the method comprising:
- dispensing steam into a container (3) containing food (2) through at least one first opening (5) of a dispenser (4) arranged over the container (3);
- dispensing hot water into the container (3) through at least one second opening (6) of the dispenser (4);
- supplying steam to the first opening (5) through a first duct (7) and a first solenoid valve (8);
- supplying hot water to the second opening (6) through a second duct (9) and a second solenoid valve (10);
- controlling the opening and the closing of the first and the second solenoid valves (8, 10) so as to modulate the time of steam supply and the volume of hot water depending on a selected cooking program; said method for cooking food being **characterised in that** it further comprises the steps of:
- controlling a first opening/closing state (45) of the first solenoid valve (8) so as to supply in a continuous manner steam to the first opening (5); and
- controlling a second opening/closing state (46) of the second solenoid valve (10) so as to supply hot water to the second opening (6) at intervals.

9. The method as claimed in Claim 8, and comprising closing in sequence the second solenoid valve (10) and, after a given time interval, the first solenoid valve (8).

10. The method as claimed in any one of Claims 8 or 9, and comprising selecting a cooking program from a plurality of cooking programs related to respective recipes; and controlling the first and the second solenoid valves (8, 10) depending on the selected cooking program.

11. The method as claimed in any one of Claims 8 to 10, and comprising emitting an authorization signal to open the container (3) and to remove the container (3) from the machine (1).

12. The method as claimed in any one of Claims 8 to 11, and comprising setting cooking programs depending on respective recipes.

13. The method as claimed in any one of Claims 8 to 12, and comprising selecting the time of the steam supply, and/or the volume of hot water to be supplied, and/or the hot water supply intervals, and/or the delay of the hot water supply with respect to the steam supply, and/or the delay of the opening of the container (3) with respect to the closing of the first solenoid valve (8).

## Patentansprüche

1. Maschine zum Garen von Lebensmitteln, wobei die Maschine (1) Folgendes umfasst:
- einen Spender (4), der so ausgestaltet ist, dass er über einem Behälter (3), der Lebensmittel (2) enthält, angeordnet ist und den Behälter (3) verschließt, und der mindestens eine erste Öffnung (5) zur Abgabe von Dampf in den Behälter (3) und mindestens eine zweite Öffnung (6) zur Abgabe von Heißwasser in den Behälter (3) umfasst;
- einen ersten Kanal (7) und ein erstes Solenoidventil (8) zur Zuführung von Dampf zu der ersten Öffnung (5);
- einen zweiten Kanal (9) und ein zweites Solenoidventil (10) zur Zuführung von Heißwasser zu der zweiten Öffnung (6); und
- eine Steuereinheit (11), die so ausgestaltet ist, dass sie das Öffnen und Schließen des ersten und des zweiten Solenoidventils (8, 10) steuert, sodass die Zeit der Dampfzufuhr und die Menge von Wasser in Abhängigkeit von einem ausgewählten Garprogramm angepasst werden, wobei die Maschine zum Garen von Lebensmitteln **dadurch gekennzeichnet ist, dass** die Steuereinheit (11) so ausgestaltet ist, dass sie einen ersten Öffnungs-/Schließzustand (45) des ersten Solenoidventils (8) so steuert, dass Dampf in kontinuierlicher Weise zu der ersten Öffnung (5) zugeführt wird, und einen zweiten Öffnungs-/Schließzustand (46) des zweiten Solenoidventils (10) so steuert, dass Heißwasser in Intervallen zu der zweiten Öffnung (6) zugeführt wird.

2. Maschine nach Anspruch 1, wobei das erste Solenoidventil (8) und das zweite Solenoidventil (10) vom Ein-Aus-Typ sind.

3. Maschine nach Anspruch 1 oder 2, wobei die Steuereinheit (11) so ausgestaltet ist, dass sie der Reihe nach das zweite Solenoidventil (10) und, nach einem gegebenen Zeitintervall, das erste Solenoidventil (8) schließt.

4. Maschine nach einem beliebigen der vorhergehenden Ansprüche, wobei die Steuereinheit (11) so ausgestaltet ist, dass sie ein Autorisierungssignal zum Öffnen des Behälters (3) und zum Entfernen des Behälters (3) aus der Maschine (1) aussendet.

5. Maschine nach einem beliebigen der vorhergehenden Ansprüche, wobei die Steuereinheit (11) eine Benutzerschnittstelle (43) umfasst, die so ausgestaltet ist, dass sie ein Garprogramm aus einer Vielzahl von Garprogrammen im Zusammenhang mit jeweiligen Rezepten auswählt; wobei die Steuereinheit (11) so ausgestaltet ist, dass sie das erste und das zweite Solenoidventil (8, 10) in Abhängigkeit von dem ausgewählten Garprogramm steuert.

6. Maschine nach Anspruch 5, wobei die Benutzerschnittstelle (43) so ausgestaltet ist, dass sie Garprogramme in Abhängigkeit von jeweiligen Rezepten einstellt.

7. Maschine nach Anspruch 5 oder 6, wobei die Benutzerschnittstelle (43) so ausgestaltet ist, dass sie die Zeit der Dampfzufuhr und/oder die Menge von zuzuführendem Heißwasser und/oder die Heißwasserzufuhrintervalle und/oder die Verzögerung der Heißwasserzufuhr in Bezug auf die Dampfzufuhr und/oder die Verzögerung eines Öffnens des Behälters (3) in Bezug auf das Schließen des ersten Solenoidventils (8) auswählt.

8. Verfahren zum Garen von Lebensmitteln, wobei das Verfahren Folgendes umfasst:
- Abgeben von Dampf in einen Behälter (3), der Lebensmittel (2) enthält, durch mindestens eine erste Öffnung (5) eines Spenders (4), der über dem Behälter (3) angeordnet ist;
- Abgeben von Heißwasser in den Behälter (3) durch mindestens eine zweite Öffnung (6) des Spenders (4);
- Zuführen von Dampf durch einen ersten Kanal (7) und ein erstes Solenoidventil (8) zu der ersten Öffnung (5);
- Zuführen von Heißwasser durch einen zweiten Kanal (9) und ein zweites Solenoidventil (10) zu der zweiten Öffnung (6);
- Steuern des Öffnens und des Schließens des ersten und des zweiten Solenoidventils (8, 10), sodass die Zeit der Dampfzufuhr und die Menge von Heißwasser in Abhängigkeit von einem ausgewählten Garprogramm angepasst werden; wobei das Verfahren zum Garen von Lebensmitteln **dadurch gekennzeichnet ist, dass** es ferner die folgenden Schritte umfasst:
- Steuern eines ersten Öffnungs-/Schließzustands (45) des ersten Solenoidventils (8) so, dass Dampf in kontinuierlicher Weise zu der ersten Öffnung (5) zugeführt wird; und
- Steuern eines zweiten Öffnungs-/Schließzustands (46) des zweiten Solenoidventils (10) so, dass Heißwasser in Intervallen zu der zweiten Öffnung (6) zugeführt wird.

9. Verfahren nach Anspruch 8, und umfassend Schließen der Reihe nach des zweiten Solenoidventils (10) und, nach einem gegebenen Zeitintervall, des ersten Solenoidventils (8).

10. Verfahren nach einem beliebigen der Ansprüche 8 oder 9, und umfassend Auswählen eines Garprogramms aus einer Vielzahl von Garprogrammen im Zusammenhang mit j eweiligen Rezepten; und Steuern des ersten und des zweiten Solenoidventils (8, 10) in Abhängigkeit von dem ausgewählten Garprogramm.

11. Verfahren nach einem beliebigen der Ansprüche 8 bis 10, und umfassend Aussenden eines Autorisierungssignals zum Öffnen des Behälters (3) und zum Entfernen des Behälters (3) aus der Maschine (1).

12. Verfahren nach einem beliebigen der Ansprüche 8 bis 11, und umfassend Einstellen von Garprogrammen in Abhängigkeit von jeweiligen Rezepten.

13. Verfahren nach einem beliebigen der Ansprüche 8 bis 12, und umfassend Auswählen der Zeit der Dampfzufuhr und/oder der Menge von zuzuführendem Heißwasser und/oder der Heißwasserzufuhrintervalle und/oder der Verzögerung der Heißwasserzufuhr in Bezug auf die Dampfzufuhr und/oder der Verzögerung des Öffnens des Behälters (3) in Bezug auf das Schließen des ersten Solenoidventils (8).

## Revendications

1. Machine de cuisson d'aliments, la machine (1) comprenant :
- un distributeur (4) configuré pour être disposé au-dessus d'un récipient (3) contenant des aliments (2) et pour fermer le récipient (3) et comprenant au moins une première ouverture (5) pour distribuer de la vapeur dans le récipient (3) et au moins une seconde ouverture (6) pour distribuer de l'eau chaude dans le récipient (3) ;
- un premier conduit (7) et une première électrovanne (8) pour alimenter en vapeur la première ouverture (5) ;
- un second conduit (9) et une seconde électrovanne (10) pour alimenter en eau chaude la seconde ouverture (6) ; et
- une unité de commande (11) configurée pour commander l'ouverture et la fermeture des première et seconde électrovannes (8, 10) de manière à moduler le temps d'alimentation en vapeur et le volume d'eau selon un programme de cuisson sélectionné,
ladite machine de cuisson d'aliments étant **caractérisée en ce que** l'unité de commande (11) est configurée pour commander un premier état d'ouverture/de fermeture (45) de la première électrovanne (8) afin d'alimenter de manière continue en vapeur la première ouverture (5) et pour commander un second état d'ouverture/de fermeture (46) de la seconde électrovanne (10) afin d'alimenter en eau chaude la seconde ouverture (6) à intervalles réguliers.

2. Machine selon la revendication 1, la première électrovanne (8) et la seconde électrovanne (10) étant de type tout ou rien.

3. Machine selon la revendication 1 ou 2, l'unité de commande (11) étant configurée pour fermer en séquence la seconde électrovanne (10) et, après un intervalle de temps donné, la première électrovanne (8).

4. Machine selon l'une quelconque des revendications précédentes, l'unité de commande (11) étant configurée pour émettre un signal d'autorisation pour ouvrir le récipient (3) et pour retirer le récipient (3) de la machine (1).

5. Machine selon l'une quelconque des revendications précédentes, l'unité de commande (11) comprenant une interface utilisateur (43) configurée pour sélectionner un programme de cuisson parmi une pluralité de programmes de cuisson relatifs à des recettes respectives ; l'unité de commande (11) étant configurée pour commander les première et seconde électrovannes (8, 10) selon le programme de cuisson sélectionné.

6. Machine selon la revendication 5, l'interface utilisateur (43) étant configurée pour établir des programmes de cuisson selon des recettes respectives.

7. Machine selon la revendication 5 ou 6, l'interface utilisateur (43) étant configurée pour sélectionner le temps de l'alimentation en vapeur, et/ou le volume d'eau chaude à alimenter, et/ou les intervalles d'alimentation en eau chaude, et/ou le retard de l'alimentation en eau chaude par rapport à l'alimentation en vapeur, et/ou le retard de l'ouverture du récipient (3) par rapport à la fermeture de la première électrovanne (8).

8. Procédé de cuisson d'aliments, le procédé comprenant :
- la distribution de vapeur dans un récipient (3) contenant des aliments (2) par au moins une première ouverture (5) d'un distributeur (4) disposé au-dessus du récipient (3) ;
- la distribution d'eau chaude dans le récipient (3) par au moins une seconde ouverture (6) du distributeur (4) ;
- l'alimentation en vapeur de la première ouverture (5) par un premier conduit (7) et une première électrovanne (8) ;
- l'alimentation en eau chaude de la seconde ouverture (6) par un second conduit (9) et une seconde électrovanne (10) ;
- la commande de l'ouverture et de la fermeture des première et seconde électrovannes (8, 10) de manière à moduler le temps d'alimentation en vapeur et le volume d'eau chaude selon un programme de cuisson sélectionné ; ledit procédé de cuisson d'aliments étant **caractérisé en ce qu'**il comprend en outre les étapes suivantes :
- la commande d'un premier état d'ouverture/de fermeture (45) de la première électrovanne (8) de manière à alimenter en vapeur de manière continue la première ouverture (5) ; et
- la commande d'un second état d'ouverture/de fermeture (46) de la seconde électrovanne (10) de manière à alimenter en eau chaude la seconde ouverture (6) à intervalles réguliers.

9. Procédé selon la revendication 8, et comprenant la fermeture en séquence de la seconde électrovanne (10) et, après un intervalle de temps donné, de la première électrovanne (8).

10. Procédé selon l'une quelconque des revendications 8 ou 9, et comprenant la sélection d'un programme de cuisson parmi une pluralité de programmes de cuisson relatifs à des recettes respectives ; et la commande des première et seconde électrovannes (8, 10) selon le programme de cuisson sélectionné.

11. Procédé selon l'une quelconque des revendications 8 à 10, et comprenant l'émission d'un signal d'autorisation pour ouvrir le récipient (3) et pour retirer le récipient (3) de la machine (1).

12. Procédé selon l'une quelconque des revendications 8 à 11, et comprenant l'établissement de programmes de cuisson selon des recettes respectives.

13. Procédé selon l'une quelconque des revendications 8 à 12, et comprenant la sélection du temps de l'alimentation en vapeur, et/ou du volume d'eau chaude à alimenter, et/ou des intervalles d'alimentation en eau chaude, et/ou du retard de l'alimentation en eau chaude par rapport à l'alimentation en vapeur, et/ou du retard de l'ouverture du récipient (3) par rapport à la fermeture de la première électrovanne (8).
